# FASCICULE DE BREVET EUROPEEN

(11) **EP 2 689 560 B1**
(45) Date de publication et mention de la délivrance du brevet: **18.12.2019**
(21) Numéro de dépôt: 12714819.5
(22) Date de dépôt: 21.03.2012
(51) Int. Cl.: H04L 12/26, H04L 29/08, G06F 9/448

(54) **PROCEDE ET DISPOSITIF D'EXTRACTION DE DONNEES D'UN FLUX DE DONNEES CIRCULANT SUR UN RESEAU IP**
VERFAHREN UND VORRICHTUNG ZUR EXTRAKTION VON IN EINEM IP-NETWERK LAUFENDEN DATEN
METHOD AND DEVICE FOR EXTRACTION OF DATA CIRCULATING IN AN IP NETWORK

(30) Priorité: 25.03.2011 FR 1152475
(43) Date de publication de la demande: 29.01.2014
(73) Titulaire: Qosmos Tech, 75017 Paris (FR)
(72) Inventeur: ABELA, Jérôme, F-92700 Colombes (FR)
(74) Mandataire: Plasseraud IP
(86) Numéro de dépôt international: PCT/FR2012/050585
(87) Numéro de publication internationale: WO 2012/131229

(56) Documents cités:
- CN-A- 101 282 362
- US-A1- 2003 110 208
- YUPING HUANG ET AL: "Fast Algorithms for Multi-stream Content Detection", ELECTRONIC COMMERCE AND SECURITY, 2009. ISECS '09. SECOND INTERNATIONAL SYMPOSIUM ON, IEEE, PISCATAWAY, NJ, USA, 22 mai 2009 (2009-05-22), pages 34-38, XP031536675, ISBN: 978-0-7695-3643-9

## Description

La présente invention concerne les techniques d'analyse de flux de données circulant sur des réseaux de télécommunication, dans des paquets du protocole IP ("Internet Protocol"). Plus particulièrement, on cherche ici à extraire en temps réel des données relevant d'une ou plusieurs catégories spécifiées sans s'embarrasser avec la masse énorme de données circulant sur le réseau.

Des analyseurs de paquets IP comme celui distribué sous l'appellation Wireshark réalisent une extraction globale du contenu des paquets porteurs de données d'un flux pour le soumettre ensuite à une analyse complète permettant d'identifier chacun des différents éléments composant ce contenu. Cette méthodologie n'est pas bien adaptée à l'observation en temps réel de flux multiples parce qu'elle requiert l'extraction en temps réel de la totalité d'un flux pour son analyse. En outre, en cas d'évolution du protocole selon lequel le flux est construit, il est nécessaire de modifier l'analyseur, même si l'évolution est mineure ou concerne des aspects du protocole qui ne sont pas pertinents par rapport aux informations recherchées.

Le document CN 101 282 362 propose un procédé de détection de message mettant en œuvre une machine à états.

Il existe un besoin pour une technique permettant une extraction efficace et une cartographie synchronique d'informations ciblées présentes dans les flux de données sur des réseaux de type IP.

Il est proposé un procédé selon la revendication 1 et un dispositif selon la revendication 5. Des modes de réalisation sont décrits dans les revendications dépendantes 2 à 4 et 6 à 9. Il est également proposé un procédé d'extraction de données d'un flux de données circulant sur un réseau IP, les données du flux étant organisées selon un protocole de couche applicative (couche 7 du modèle OSI). Dans ce contexte et du point de vue de la couche applicative, le flux est segmenté de manière quasi-aléatoire par les processus de couche réseau (IP) et/ou transport (TCP, UDP, ...). On souhaite néanmoins, et alors que le trafic circule à très haut débit sur le réseau IP, être capable d'extraire pour traitement des données précises contenues dans le flux. Le procédé comprend:
- une phase de configuration dans laquelle une machine à états est construite avec des états et des transitions configurés selon au moins un type de données à extraire du flux, les transitions entre états étant activées par des conditions respectives définies en fonction de règles d'organisation des données du flux selon le protocole de couche applicative, et dans laquelle au moins un état est sélectionné pour l'extraction de données du flux; et
- une phase d'analyse en temps réel du flux de données.

La phase d'analyse en temps réel comprend:
- observer les données du flux issues de paquets IP circulant successivement sur le réseau;
- lorsque la machine à états est dans un état courant, déterminer si une condition d'activation d'une transition de l'état courant vers un état cible est réalisée par les données observées du flux et lorsque cette condition d'activation est réalisée, faire passer la machine à états dans l'état cible;
- extraire les données du flux lorsque la machine à états est dans un état sélectionné dans la phase de configuration pour l'extraction de données du flux; et
- ignorer les données du flux lorsque la machine à états est dans un état non sélectionné dans la phase de configuration.

La machine à états, dont les nœuds décrivent les éléments structurants pertinents de la grammaire du protocole, permet d'extraire les informations utiles de sémantique et de subsomption lors de leur apparition dans le flux. La machine à états est composée d'états et de transitions. Les transitions permettent de passer d'un état à un autre et sont typiquement activées par des lexèmes lors de l'observation du flux de données.

La machine à états employée est fonctionnelle sur des flux de données qui peuvent avoir un contenu très variable (textuel ou binaire), dont la syntaxe n'est pas nécessairement parfaitement connue, qui sont susceptibles de contenir des erreurs et qui ne sont pas disponibles dans leur intégralité à chaque instant.

Pour cela, au lieu d'extraire tout le flux, le procédé recherche les conditions permettant l'activation des différentes transitions en analysant les données du flux en temps réel. Les activations de transition et les données présentes entre deux états peuvent être gérées séparément.

En outre, le procédé permet la gestion de la mise en mémoire tampon des seules parties du flux nécessaires à la recherche des conditions d'activation des transitions en présence de fragmentation des données. Dans un tel mode de réalisation, des conditions d'activation de transitions de la machine à états comprennent la présence de lexèmes respectifs dans les données du flux, et la phase d'analyse en temps réel du flux de données comprend, lorsque la machine à états est dans un état courant:
- stocker en mémoire tampon au moins N-1 caractères situés à la fin des données du flux observées dans un paquet IP, N étant le plus grand nombre de caractères des lexèmes correspondants aux transitions depuis l'état courant; et
- à réception des données suivantes du flux issues d'un paquet IP circulant ultérieurement sur le réseau, placer le contenu de la mémoire tampon devant les données reçues pour rechercher la présence éventuelle d'un lexème divisé entre les deux paquets.

Les états de la machine à états sélectionnés dans la phase de configuration peuvent comprendre un ou plusieurs états dans lesquels les données extraites du flux sont directement transférées à un processeur externe.

Les états sélectionnés de la machine à états peuvent aussi comprendre un ou plusieurs états dans lesquels les données extraites du flux sont mises en mémoire tampon puis transférées à un processeur externe une fois que la machine à états quitte cet état sélectionné. La mémoire tampon recevant les données extraites du flux dans un tel état sélectionné de la machine à états a de préférence une taille limitée à un nombre de caractères configurable.

Un autre aspect de la présente invention se rapporte à un dispositif adapté à la mise en œuvre du procédé ci-dessus. Ce dispositif comprend:
- une machine à états ayant des états et des transitions configurés selon au moins un type de données à extraire du flux, les transitions entre états étant activées par des conditions respectives définies en fonction de règles d'organisation des données du flux selon le protocole de couche applicative, au moins un état de la machine à états étant sélectionné pour l'extraction de données du flux;
- une entrée pour recevoir en temps réel les données du flux issues de paquets IP circulant successivement sur le réseau;
- un détecteur de transitions pour déterminer, lorsque la machine à états est dans un état courant, si une condition d'activation d'une transition de l'état courant vers un état cible est réalisée par les données du flux reçues sur l'entrée et pour faire passer la machine à états dans l'état cible lorsque ladite condition d'activation est réalisée. Les données du flux sont extraites lorsque la machine à états est dans un état sélectionné pour l'extraction de données du flux, et ignorées lorsque la machine à états est dans un état non sélectionné pour l'extraction de données du flux.

D'autres particularités et avantages de la présente invention apparaîtront dans la description ci-après d'un exemple de réalisation non limitatif, en référence aux dessins annexés, dans lesquels :
- la figure 1 est un schéma simplifié d'un réseau IP auquel l'invention peut s'appliquer;
- la figure 2 est un schéma synoptique d'un équipement raccordable au réseau de la figure 1 pour la mise en œuvre de l'invention;
- la figure 3 est un schéma synoptique d'un exemple de dispositif d'extraction de données selon l'invention; et
- la figure 4 est un diagramme d'une machine à états utilisable dans un cas particulier présenté à titre d'illustration.

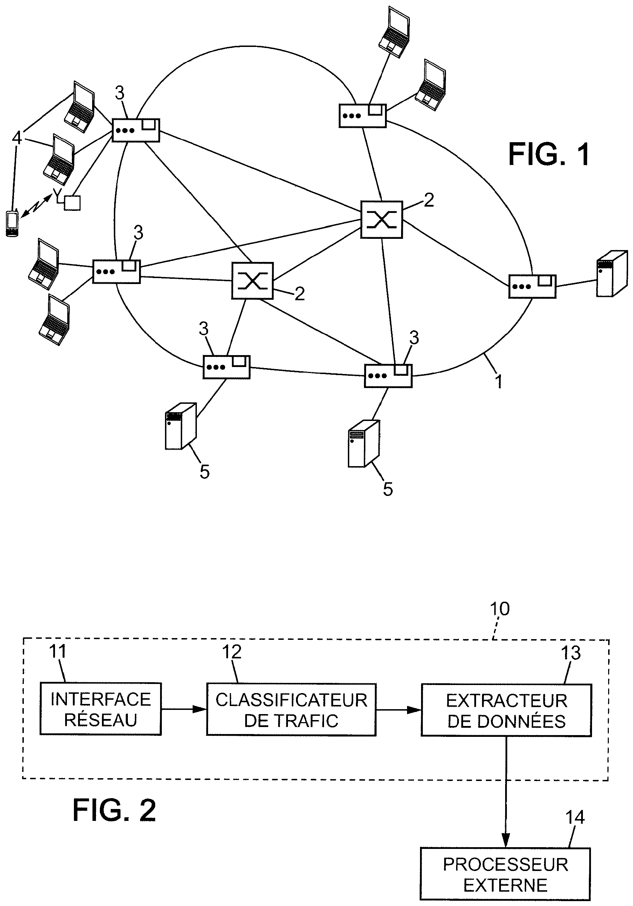

En référence à la figure 1, un réseau IP 1 tel que l'Internet comprend de façon classique différents équipements de routage, certains (2) étant internes au réseau et d'autres (3) étant situés en périphérie pour le raccordement de diverses installations, comme des terminaux d'utilisateurs 3, des installations informatiques d'utilisateurs 4, des serveurs par lesquels des opérateurs de réseau gèrent leurs abonnés, des passerelles vers d'autres réseaux, ...

Les liaisons entre les routeurs 2, 3 sont réalisées par des connexions à très haut débit offertes, par exemple, par des lignes à fibres optiques. Des valeurs représentatives de débit sont de plusieurs dizaines de gigabits par seconde.

A l'intérieur des différents flux de données que portent ces liaisons à haut débit, certaines applications requièrent l'extraction de données spécifiques, par exemple à des fins de facturation, de sécurité, de gestion de la qualité de services, ...

Il est souhaitable que les appareils recevant les données ainsi extraites ne soient pas submergés par les quantités de données potentiellement immenses qui circulent sur le réseau IP 1. Dans ce but, on peut utiliser un équipement 10 tel que celui représenté schématiquement sur la figure 2.

Cet équipement 10 est typiquement installé au niveau d'un routeur 2, 3 pour être interfacé sur l'une des liaisons à haut débit entre ces routeurs. On comprendra toutefois que l'équipement 10 peut aussi être installé sur une liaison située entre un routeur d'extrémité 3 et des passerelles ou des installations d'utilisateurs.

L'équipement 10 représenté sur la figure 2 comporte une interface réseau 11 adaptée à la couche physique et aux couches protocolaires basses de la liaison sur laquelle l'équipement est monté. Le trafic vu par l'interface réseau 11 est soumis à un classificateur 12 capable d'identifier les flux de données auxquelles appartiennent les paquets IP successifs constituant ce trafic. Le classificateur 12 met en œuvre une technique de reconnaissance et d'analyse de protocole comme par exemple celle décrite dans WO 2004/017595 A2. Son architecture peut éventuellement être répartie comme décrit dans WO 2006/120039 A1.

Le classificateur de trafic 12 est configuré pour présenter sélectivement à un dispositif d'extraction de données 13 les paquets IP qui relèvent d'un ou plusieurs flux de données spécifiés par l'administrateur du système. Pour chacun de ces flux, l'extracteur 13 sélectionne les données pertinentes en fonction d'une configuration faite par un utilisateur, les extrait du flux et les communique à un processeur externe 14 qui réalise les traitements requis sur les données extraites (par exemple traitements pour facturation, pour des applications de sécurité de qualité de service, ...). L'utilisateur auquel on fait ici référence est celui qui gère les applications exécutées par le processeur externe 14. Cet utilisateur peut-être confondu avec l'administrateur du système qui spécifie les flux de données à extraire. Dans une autre architecture de service, l'utilisateur peut également être distinct de l'administrateur du système si celui-ci offre le service d'extraction de données à plusieurs personnes ayant des traitements différents à effectuer.

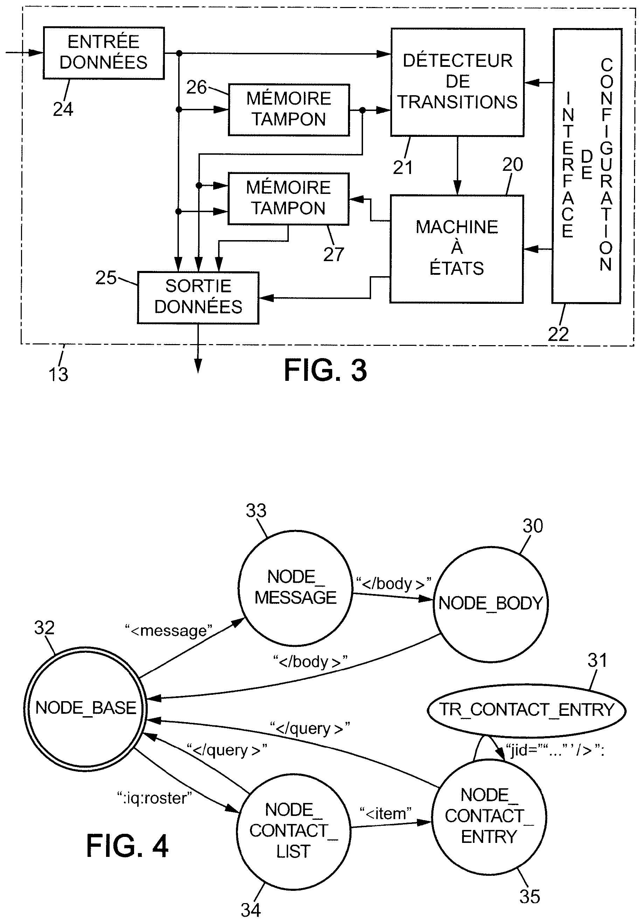

L'extracteur de données 13 peut avoir une architecture telle que celle illustrée par la figure 3. Cette architecture est centrée sur une machine à états 20 et un détecteur de transitions 21 que l'utilisateur configure par l'intermédiaire d'une interface homme/machine appropriée 22. Dans une phase de configuration, l'utilisateur définit via l'interface 22 les états et les transitions de la machine à états 20 ainsi que les conditions d'activation des transitions entre les états. L'interface 22 peut intégrer la connaissance de la grammaire du protocole afin d'assister l'utilisateur dans l'opération de configuration.

L'extracteur de données 13 à une entrée 24 qui reçoit en temps réel les données du flux issues de paquets IP, qui lui sont présentées par le classificateur de trafic 12. Les données extraites de ce flux conformément à la configuration réalisée via l'interface 22 sont délivrées au processeur externe 14 par la sortie de données 25.

L'utilisation d'une machine à états dans le cas de réseaux de type IP impose des contraintes fonctionnelles. En effet, les flux sont alors fragmentés, chaque fragment issu d'un paquet IP étant de taille variable. Cette fragmentation peut intervenir à n'importe quel moment dans la grammaire du protocole. Il convient de prendre en compte les deux cas suivants:
- les données nécessaires à l'activation de la condition d'une transition peuvent être à cheval sur une fin de paquet et sur le début du paquet suivant;
- les données utiles devant être traitées dans un état peuvent être présentes sur plusieurs paquets alors que l'utilisateur peut demander qu'elles ne soient pas traitées de manière fragmentée.

Pour prendre en compte ces deux cas, l'extracteur de données 13 comporte deux mémoires tampon 26, 27 (dans la pratique, ces tampons 26, 27 peuvent être réalisés à l'intérieur d'un même plan mémoire).

La mémoire tampon 26 sert à gérer les situations où un lexème recherché par le détecteur de transitions 21 se trouve à cheval entre deux paquets IP successivement reçus sur l'entrée 24. Dans un état donné de la machine à états 20, plusieurs lexèmes peuvent être recherchés pour l'activation éventuelle des transitions disponibles depuis cet état. Si N désigne le nombre maximum de caractères de ces lexèmes, il convient d'enregistrer dans la mémoire tampon 26 les N-1 derniers caractères du flux de données reçus dans chaque paquet IP reçu alors que la machine à états se trouve dans cet état donné. À réception du prochain paquet IP contenant des données du flux, le contenu de la mémoire tampon 26 est placé devant le premier caractère des données reçues sur l'entrée 24 pour que le détecteur de transitions 21 puisse observer la présence éventuelle de l'un des lexèmes cherchés. Cette coopération entre le détecteur de transitions 21 et la mémoire tampon 26 assure que les lexèmes recherchés ne sont pas perdus du fait de la segmentation du flux au niveau IP. On notera que la mémoire tampon 26 peut éventuellement contenir un peu plus que N-1 caractères, sa taille devant néanmoins rester largement inférieure à celle des données à extraire.

La machine à états 20 comporte une liste d'états établie suivant la structure de la grammaire du flux. Chaque état contient une liste de transitions dont les conditions d'activation, recherchées par le détecteur de transitions 21, sont typiquement la présence de lexèmes reçus dans le flux de données. À chaque état est en outre associée une procédure indiquant la manière de traiter les données qui sont reçues pendant que la machine 20 se trouve dans cet état.

Chaque transition d'un état spécifie une condition d'activation et l'état cible associé, ainsi que la longueur minimum de données qu'il est nécessaire d'analyser afin d'assurer le fonctionnement de la condition. La condition d'activation, spécifique à un état et à la transition dont elle dépend, peut prendre l'une des formes suivantes:
- découverte d'une chaine de caractères donnée en utilisant par exemple l'algorithme de recherche de Boyer-Moore;
- découverte d'une chaine de caractères donnée en utilisant un arbre de recherche (arbre préfixe ou arbre numérique ordonné);
- progression dans le flux d'un nombre d'octets donnés;
- progression dans le flux d'un nombre d'octets variable ce qui est une généralisation du cas précédent. Dans ce cas, la taille du saut n'est pas indiquée dans la description de la machine à états, mais se trouve renseignée à l'entrée de l'état depuis lequel la transition existe;
- une condition générique: en pratique, on indique quelle est cette condition à la machine à états via une fonction capable de trouver la transition, ce qui en fait une généralisation qui englobe tous les cas précédents.

Les conditions sont généralement activées à la suite d'une progression dans la lecture du flux de données reçu sur l'entrée 24. Lorsqu'une telle transition est activée, il est possible d'exploiter les données présentes avant l'activation de la transition permettant le passage à l'état suivant. Selon la configuration demandée par l'utilisateur, les données présentes entre deux changements d'état peuvent être:
- ignorées; ou
- transmises à une fonction liée au premier état pour traitement. Cette fonction est typiquement l'envoi immédiat des données par la sortie 25; ou
- mises dans la mémoire tampon 27 puis transmises à une fonction liée au premier état pour traitement. Cette fonction est typiquement l'envoi des données par la sortie 25 au moment où la machine à états 20 quitte l'état courant. La mémoire tampon 27 peut être configurée pour avoir une taille maximale en termes de nombre de caractères. La machine à états 20 peut être forcée de quitter l'état courant lorsque ce nombre maximal de caractères a été enregistré dans la mémoire tampon 27. Ceci permet d'éviter un débordement de cette mémoire tampon.

À titre d'illustration, des exemples particuliers de mise en œuvre de l'invention sont présentés ci-après dans le cas du protocole de messagerie instantanée connu sous l'appellation Jabber ou XMPP ("Extensible Messaging and Presence Protocol"), basé sur le langage XML ("Extensible Markup Language"). On pourra sans difficulté généraliser ces exemples à d'autres extensions du protocole Jabber/XMPP ou à d'autres protocoles.

Par souci de performance (mémoire et temps de traitement de l'analyse du texte) et de robustesse, la grammaire du protocole Jabber n'est pas décrite entièrement. Seuls sont considérés les marqueurs qui constituent les invariants autour des informations dont l'extraction est souhaitée.

Dans l'Exemple 1, l'utilisateur cherche à extraire le contenu des messages transmis dans le protocole Jabber.

Dans l'Exemple 2, l'extraction porte sur les contacts (adresses d'e-mail) transmis dans le protocole Jabber.

La machine à états 20 peut être construite selon le diagramme illustré par la figure 4 pour mettre en œuvre ces exemples de réalisation. Deux types d'états sont sélectionnés par l'utilisateur dans la machine à états 20 pour réaliser l'extraction des données. Dans le premier type (état 30 nommé "NODE_BODY"), le contenu des messages ne sera jamais mémorisé dans le dispositif d'extraction 13 car il peut être très volumineux. Dans le deuxième type (état 31 nommé "TR_CONTACT_ENTRY"), les adresses d'e-mail pourront être mises en mémoire tampon 27 afin d'être émises en une seule fois vers le processeur externe 14.

Dans les deux cas, lors de l'appel au processus (callback) de transfert des données dans un état sélectionné, l'extracteur 13 fournit au processeur 14 l'information sur l'état courant (NODE_BODY ou TR_CONTACT_ENTRY) ainsi que les données extraites, ce qui donne les informations de sémantique et de subsomption nécessaires à la correcte interprétation des données.

Depuis un nœud 32 nommé "NODE_BASE", dans lequel se trouve initialement la machine à états 20, une branche du graphe décrivant la machine à états détecte le début du contenu d'un message à partir de la détection du lexème *<message,* tandis qu'une autre branche recherche une information présente uniquement dans les données de signalisation repérées par le lexème *:iq:roster.*

Les états et transitions de la machine à états 20 représentée sur la figure 4 sont définis de la manière suivante dans la phase de configuration:
{ node: NODE_BASE, nextnode: NODE_MESSAGE, start: " *<message* "},
{ node: NODE_BASE, nextnode: NODE_CONTACT_LIST, start: " *:iq:roster*"}*,*
{ node: NODE_MESSAGE, nextnode: NODE_BODY, start: " *<body>* "},
{ node: NODE_BODY, nextnode: NODE_BASE, start: " *<*/*body>* "},
{ node: NODE_CONTACT_LIST, nextnode: NODE_BASE, start: "*<*/*query>*"},
{ node: NODE_CONTACT_LIST, nextnode: NODE_CONTACT_ENTRY, start: "*<item*"},
{ node: NODE_CONTACT_ENTRY, transnode: TR_CONTACT_ENTRY, start: *"jid='",* end: " '/> ", flag:SM_TRUNCATE },
{ node: NODE_CONTACT_ENTRY, nextnode: NODE_BASE, start: "*<*/*query>*"}, où:
   - "node" est le nom de l'état courant;
   - "nextnode" est le nom de l'état suivant lorsque la condition de la transition est activée;
   - "start" désigne le marqueur à rechercher dans le flux pour activer cette transition.

Dans le cas où un état temporaire lié à la mise en mémoire tampon 27 est utilisé par la machine à états, il y a deux informations supplémentaires:
- "transnode" (transitory node): nom de l'état temporaire de la transition rapide;
- "end": marqueur recherché pour sortir de la transition rapide;
- "flag": marqueur optionnel. Dans le cas présent, il indique de tronquer les données si le marqueur de fin ne peut pas être trouvé alors que la mémoire tampon 27 est pleine.

### Exemple 1 :

Après détection du lexème *<message,* la première branche amène la machine à états 20 dans l'état NODE_MESSAGE (33) où aucune extraction n'est encore réalisée. La détection du lexème *<body>* dans l'état NODE_MESSAGE conduira alors la machine 20 dans l'état NODE_BODY. Dans cet état 30, la callback envoie sur la sortie 25 toutes les données reçues des paquets IP successifs, jusqu'à ce que soit détecté le marqueur de fin *<*/*body>* qui renvoie directement à l'état initial 32.

De la sorte, l'extracteur de données 13 isole tout contenu des messages du flux inclus entre les balises XML *<body>* et *<*/*body>* définies dans le protocole. Le contenu du message pouvant être volumineux, il ne transite pas par la mémoire tampon 27. Il sera émis en une ou plusieurs fois, lors de la réception successive des paquets IP.

Le flux applicatif peut par exemple se présenter ainsi:

```
      <message xmlns-"jabber.client" type="chat" to="cyberic99@gmail.com"id="aac3a">
      <body>Bonjour Eric</body>
      <active xmlns="http://jabber.org/protocol/chatstates"/>
      <nick xmlns="http://jabber.org/protocol/nick">sir swiss</nick>
      </message>
```

L'extracteur 13 fournira alors le corps de message *"Bonjour Eric"* au processeur externe 14.

Il peut se produire que le marqueur de début soit segmenté sur deux paquets IP, par exemple:
A. *<message xmlns="jabber:client" type="chat" to="cyberic99@gmail.com" id="aac3a"><b*
B. *ody>Bonjour Eric<*/*body><active xmlns="http:*//*jabber.orglprotocol*/*chatstates"*/*<nick xmlns="http:*//*jabber.orglprotocol*/*nick">sir swiss<*/*nick>*

Dans l'état NODE_MESSAGE où la machine à états 20 se trouve à la fin du paquet A, la longueur du plus long lexème (*<body>* = 6 caractères) activant une transition, moins un caractère (1 octet), soit cinq caractères, est mise en mémoire tampon 26. À la fin du paquet A, la mémoire 26 contient alors "a"><b". À réception du paquet B, les chaînes de caractères *"<b"* et *"ody>"* sont réassemblées et le message est émis en une fois puisqu'il est complet dans le paquet 2. Le reste du flux est ignoré par l'extracteur 13.

Il peut aussi se produire que le contenu du message soit segmenté sur plusieurs paquets IP, par exemple:
C. *<message xmlns-'jabber.client"type="chat"to="cyberic99@gmail.com" id="aac3a"><body>Bonjour*
D. *Eric<*/*body><active xmlns="http:*//*jabber.orglprotocol*/*chatstates"*/*><nick xmlns="http:*//*jabber.orglprotocol*/*nick">sirswiss<*/*nick><*/*message>*

Dans l'état NODE_BODY où la machine à états 20 se trouve à la fin du paquet C, la longueur du plus long lexème (*<*/*body>* = 7 caractères) activant une transition, moins un caractère, soit six caractères, est mise en mémoire tampon 26. Seulement "*B*" est émis vers le processeur 14 lors de la réception de ce paquet C, *"onjour"* étant gardé en mémoire 26. À réception du paquet D, le marqueur de fin *<*/*body>* est détecté, ce qui renvoie vers la sortie 25 les données de la mémoire 26 et celles du nouveau paquet situées avant le marqueur de fin, soit en tout: *"onjour Eric".* Le processeur 14 pourra ensuite procéder au réassemblage des chaînes "*B*" et *"onjour Eric"* successivement reçues de l'extracteur 13.

Il peut encore se produire que le marqueur de fin *<*/*body>* soit segmenté sur deux paquets IP, par exemple:
E. *<message xmlns="jabber:client"type="chat"to="cyberic99@gmail.com" id="aac3a"><body>BonjourEric<*/*bo*
F. *dy><active xmlns="http:*//*jabber.org*/*protocol*/*chatstates"*/*><nick xmlns="http:*//*jabber.org*/*protocol*/*nick">sirswiss<*/*nick><*/*message>*

Dans l'état NODE_BODY où la machine à états 20 se trouve à la fin du paquet E, six caractères sont mis en mémoire tampon 26 à la fin de chaque paquet IP. À la fin du paquet E, la mémoire 26 contient alors "*ic*</*bo*". Seulement *"Bonjour Er"* est émis vers le processeur 14 lors de la réception de ce paquet E. À réception du paquet F, le marqueur de fin *<*/*body>* est réassemblé et détecté, ce qui renvoie vers la sortie 25 les données de la mémoire 26 sauf celles qui appartiennent au marqueur détecté, soit: "ic".

La méthode décrite ici pour deux paquets C, D ou E, F est générale pour tout découpage du flux de données. Si plusieurs paquets plus petits que la taille du corps de message sont reçus successivement, ils sont émis au fur et à mesure de leur réception sauf les six derniers caractères conservés en mémoire tampon 26 jusqu'à réception du paquet suivant du flux, afin de permettre la recherche de la plus grande transition depuis l'état courant 30.

### Exemple 2:

Après détection du lexème *:iq:roster,* la deuxième branche du graphe de la figure 4 amène la machine à états 20 dans l'état NODE_CONTACT_LIST (34) où aucune extraction n'est encore réalisée. Si le lexème *<*/*item* est détecté dans le flux à l'état NODE_CONTACT_LIST, la machine à états 20 passe dans l'état NODE_CONTACT_ENTRY (35) où aucune extraction n'est réalisée non plus. Il faut alors que le détecteur de transitions 21 observe dans le flux le lexème *jid='* pour passer à l'état TR_CONTACT_ENTRY. Dans cet état 31, le contenu du flux reçu sur l'entrée 24 est inscrit dans la mémoire tampon 27 jusqu'à ce que soit détecté le marqueur de fin '/> qui renvoie à l'état 35 NODE_CONTACT_ENTRY. Si le lexème *<*/*query* est détecté dans le flux à l'état 34 ou 35 (NODE_CONTACT_LIST ou NODE_CONTACT_ENTRY), la machine à états 20 revient à l'état de base 32. La transition vers l'état TR_CONTACT_ENTRY est appelée transition rapide, car la machine à états 20 ne reste dans cet état 31 que pour les besoins de mise en mémoire tampon du contenu entre les deux marqueurs de début et de fin *jid='* et '/>. Lorsque le marqueur de fin '/> a été détecté, la machine à états 20 revient à l'état NODE_CONTACT_ENTRY. Le détecteur de transitions 21 peut ainsi continuer à lire les adresses d'e-mail des contacts jusqu'à ce que le marqueur *<*/*query* de fin de signalisation soit détecté.

L'extracteur de données 13 recherche ainsi dans le token XML *<item>* le contenu de l'attribut *jid,* soit le texte contenu entre *jid='* et '/>. Les adresses d'e-mail étant par nature relativement petites, il peut être demandé de l'émettre en une seule fois, dans le cas où elle est segmentée sur plusieurs paquets. La machine à états devra éventuellement mettre le contenu en mémoire tampon 27 jusqu'à réception du marqueur de fin '/>.

Le flux applicatif peut par exemple se présenter ainsi:

```
      <iq from='qosmojab@swissjabber.org/dev1'type='result'id='aab6a'>
      <queryxmlns='jabber:iq:roster'>
      <item subscription=both'jid=qosmojab@im.apinc.org'/>
      <item subscription-both'name='babydaisy'jid='babydaisy@binaryfreedom.info'/>
      <item subscription='to'jid='roiboo.crusher@gmail.com/'>
      <item subscription='to'jid='cyberic99@gmail.com'/>
      </query></iq>
```

Lorsqu'une adresse d'e-mail n'est pas fragmentée, les deux marqueurs de début et de fin *jid='* et '/> étant présents dans le même paquet du flux, l'extraction de l'adresse et son émission faire le processeur 14 sont réalisées en une seule fois, sans utilisation de la mémoire tampon 27.

Si le marqueur de début *jid='* est segmenté entre deux paquets IP, la procédure est la même que dans l'Exemple 1, avec enregistrement dans la mémoire tampon 26 de la longueur de la première transition moins 1 octet. A la réception du deuxième paquet, le marqueur *jid='* est reconstitué et la transition activée, pour entrer dans l'état temporaire TR_CONTACT_ENTRY.

Une adresse d'e-mail peut être segmentée entre deux paquets IP, par exemple:
G. *<iq from='qosmojab@swissjabber.org*/*dev1'type='result'id='aab6a'><query xmlns='jabber:iq:roster'><item subscription= both'jid='qosmojab@im*
H*. .apinc.org'*/*><itemsubscription='both'name='babydaisy' jid='babydaisy@binaryfreedom.info'*/*><item subscription='to' jid='roiboo.crusher@gmail.com'*/*><itemsubscription='to' jid='cyberic99@gmail.com'*/*><lquery><*/*iq>*

Une fois que la transition de marqueur *jid='* est activée, la machine à états 20 entre dans l'état temporaire TR_CONTACT_ENTRY où les données sont inscrites dans la mémoire tampon 27 jusqu'à la transition de fin '/>. Cette mémoire tampon 27 est d'une taille limitée, dont la valeur maximum est par exemple de 50 octets (configurable) plus la taille du marqueur de fin à rechercher '/> (soit 53 octets au total). Dans le paquet G, la chaîne de caractères *"qosmojab@im"* est mise en mémoire. Puis, dans le paquet H, des données sont ajoutées dans cette mémoire 27 jusqu'à atteindre la taille maximum calculée précédemment. Lorsque le marqueur de fin '/> est trouvé, l'ensemble des données enregistrées dans la mémoire 27 est émis sur la sortie du 25, et la machine à états 20 quitte l'état TR_CONTACT_ENTRY pour revenir à l'état 35 NODE_CONTACT_ENTRY.

Si le marqueur de fin n'est pas trouvé, il y a deux possibilités entre lesquelles un choix est fait lors de la configuration à l'aide des options des transitions. Le cas général est de continuer à rechercher le marqueur de fin '/>, en remplaçant les données mémorisées les plus anciennes par celles qui sont lues dans le flux. Les données émises lorsque le marqueur de fin est trouvé sont alors les 50 octets qui le précèdent. Une autre possibilité consiste à tronquer les données à la taille maximum mémorisable, et à activer la transition de fin pour forcer le changement d'état (option SM_TRUNCATE).

Les modes de réalisation décrits ci-dessus sont des illustrations de la présente invention. Diverses modifications peuvent leur être apportées sans sortir du cadre de l'invention qui ressort des revendications annexées.

## Revendications

1. Procédé d'extraction de données d'un flux de données circulant sur un réseau IP (1), les données du flux étant organisées selon un protocole de couche applicative, le procédé comprenant une phase d'analyse en temps réel du flux de données, exécutée par un extracteur de données (13) incluant une machine à états (20), dans lequel la machine à états (20) est construite avec des états et des transitions configurés selon au moins un type de données à extraire du flux, les transitions entre états étant activées par des conditions respectives définies en fonction de règles d'organisation des données du flux selon ledit protocole de couche applicative, au moins un état (30, 31) étant sélectionné pour l'extraction de données du flux,
dans lequel la phase d'analyse en temps réel du flux de données comprend:
• observer les données du flux issues de paquets IP circulant successivement sur le réseau;
• lorsque la machine à états est dans un état courant, déterminer si une condition d'activation d'une transition de l'état courant vers un état cible est réalisée par les données observées du flux et lorsque ladite condition d'activation est réalisée, faire passer la machine à états dans l'état cible;
• extraire les données du flux lorsque la machine à états est dans un état sélectionné pour l'extraction de données du flux; et
• ignorer les données du flux lorsque la machine à états est dans un état non sélectionné,
dans lequel dans au moins un état (31) de la machine à états (20) sélectionné pour l'extraction de données du flux, les données extraites du flux sont mises en mémoire tampon (27) avant d'être transférées à un processeur externe (14) une fois que la machine à états quitte ledit état sélectionné.

2. Procédé selon la revendication 1, dans lequel des conditions d'activation de transitions de la machine à états (20) comprennent la présence de lexèmes respectifs dans les données du flux, et dans lequel la phase d'analyse en temps réel du flux de données comprend en outre, lorsque la machine à états est dans un état courant:
• stocker en mémoire tampon (26) au moins N-1 caractères situés à la fin des données du flux observées dans un paquet IP, N étant le plus grand nombre de caractères des lexèmes correspondants aux transitions depuis l'état courant; et
• à réception des données suivantes du flux issues d'un paquet IP circulant ultérieurement sur le réseau, placer le contenu de la mémoire tampon devant les données reçues pour rechercher la présence éventuelle d'un lexème divisé entre les deux paquets.

3. Procédé selon l'une quelconque des revendications précédentes, dans lequel les états sélectionnés de la machine à états (20) comprennent un état (30) dans lequel les données extraites du flux sont directement transférées à un processeur externe (14).

4. Procédé selon la revendication 1, dans lequel la mémoire tampon (27) recevant les données extraites du flux dans ledit état sélectionné (31) de la machine à états (20) a une taille limitée à un nombre de caractères configurable.

5. Dispositif d'extraction de données d'un flux de données circulant sur un réseau IP (1), les données du flux étant organisées selon un protocole de couche applicative, le dispositif comprenant:
- une machine à états (20) ayant des états et des transitions configurés selon au moins un type de données à extraire du flux, les transitions entre états étant activées par des conditions respectives définies en fonction de règles d'organisation des données du flux selon ledit protocole de couche applicative, au moins un état (30, 31) de la machine à états étant sélectionné pour l'extraction de données du flux;
- une entrée (24) pour recevoir en temps réel les données du flux issues de paquets IP circulant successivement sur le réseau;
- un détecteur de transitions (21) pour déterminer, lorsque la machine à états est dans un état courant, si une condition d'activation d'une transition de l'état courant vers un état cible est réalisée par les données du flux reçues sur l'entrée et pour faire passer la machine à états dans l'état cible lorsque ladite condition d'activation est réalisée,
des moyens pour extraire les données du flux lorsque la machine à états est dans un état sélectionné pour l'extraction de données du flux, et des moyens pour ignorer lesdites données du flux lorsque la machine à états est dans un état non sélectionné pour l'extraction de données du flux, une mémoire tampon (27) pour mettre les données extraites du flux lorsque la machine à états est dans au moins un état (31) de la machine à états (20) sélectionné pour l'extraction de données du flux, des moyens pour transférer les données mises dans la mémoire tampon (27) à un processeur externe (14) une fois que la machine à états quitte ledit état sélectionné.

6. Dispositif selon la revendication 5, dans lequel des conditions d'activation de transitions de la machine à états (20) comprennent la présence de lexèmes respectifs dans les données du flux, et dans lequel le détecteur de transitions (21) est associé à une mémoire tampon (26) contrôlée pour recevoir, lorsque la machine à états est dans un état courant, au moins N-1 caractères situés à la fin des données du flux observées dans un paquet IP, N étant le plus grand nombre de caractères des lexèmes correspondants aux transitions depuis l'état courant, le détecteur de transitions étant agencé pour, à réception des données suivantes du flux issues d'un paquet IP circulant ultérieurement sur le réseau (1), rechercher la présence éventuelle d'un lexème divisé entre les deux paquets en plaçant le contenu de la mémoire tampon devant les données reçues.

7. Dispositif selon la revendication 5 ou 6, dans lequel les états sélectionnés de la machine à états (20) comprennent un état (30) dans lequel les données extraites du flux sont directement transférées à un processeur externe (14).

8. Dispositif selon l'une quelconque des revendications 5 à 7, dans lequel les états sélectionnés de la machine à états (20) comprennent un état (31) dans lequel les données extraites du flux sont mises en mémoire tampon (27) puis transférées à un processeur externe (14) une fois que la machine à états quitte ledit état sélectionné.

9. Dispositif selon la revendication 8, dans lequel la mémoire tampon (27) recevant les données extraites du flux dans ledit état sélectionné (31) de la machine à états (20) a une taille limitée à un nombre de caractères configurable.

## Patentansprüche

1. Verfahren zum Extrahieren von Daten aus einem Datenstrom, welcher auf einem IP-Netzwerk (1) zirkuliert, wobei die Daten des Stroms gemäß einem Anwendungsschicht-Protokoll organisiert sind, wobei das Verfahren eine Phase einer Analyse in Echtzeit des Datenstroms umfasst, welche von einer Daten-Extraktionseinheit (13) ausgeführt wird, welche eine Zustandsmaschine (20) umfasst, wobei die Zustandsmaschine (20) mit Zuständen und Übergängen konstruiert ist, welche gemäß wenigstens einem Typ von aus dem Strom zu extrahierenden Daten konfiguriert sind, wobei die Übergänge zwischen Zuständen durch jeweilige Bedingungen aktiviert werden, welche als Funktion von Regeln zur Organisation von Daten des Stroms gemäß dem Anwendungsschicht-Protokoll definiert sind, wobei wenigstens ein Zustand (30, 31) für das Extrahieren von Daten aus dem Strom ausgewählt wird,
wobei die Phase der Analyse in Echtzeit des Datenstroms umfasst:
- Beobachten der Daten des Stroms, welche von IP-Paketen stammen, welche nacheinander auf dem Netzwerk zirkulieren;
- wenn die Zustandsmaschine in einem momentanen Zustand ist, Bestimmen ob eine Bedingung einer Aktivierung eines Übergangs von dem momentanen Zustand zu einem Zielzustand durch die beobachteten Daten des Stroms gegeben ist, und wenn die Bedingung zur Aktivierung gegeben ist, Überführen der Zustandsmaschine in den Zielzustand;
- Extrahieren der Daten des Stroms, wenn die Zustandsmaschine in einem Zustand ist, welcher für ein Extrahieren von Daten des Stroms ausgewählt ist; und
- Ignorieren der Daten des Stroms, wenn die Zustandsmaschine in einem nicht-ausgewählten Zustand ist,
wobei in dem wenigstens einen Zustand (31) der Zustandsmaschine (20), welcher für das Extrahieren von Daten des Stroms ausgewählt ist, die extrahierten Daten des Stroms in einem Pufferspeicher (27) abgelegt werden, bevor sie zu einem externen Prozessor (14) übertragen werden, sobald die Zustandsmaschine den ausgewählten Zustand verlässt.

2. Verfahren nach Anspruch 1, wobei die Bedingungen zum Aktivieren der Übergänge der Zustandsmaschine (20) das Vorliegen von jeweiligen Lexemen in den Daten des Stroms umfassen, und wobei die Phase der Analyse in Echtzeit des Datenstroms ferner, wenn die Zustandsmaschine in dem momentanen Zustand ist, umfasst:
- Speichern von wenigstens N-1 Zeichen in einem Pufferspeicher (26), welche an dem Ende der Daten des Stroms angeordnet sind, welche in einem IP-Paket beobachtet werden, wobei N die größte Anzahl an Zeichen von Lexemen ist, welche den Übergängen aus dem momentanen Zustand heraus entsprechen; und
- bei einem Empfang von nachfolgenden Daten des Stroms, welche von einem IP-Paket stammen, welches anschließend auf dem Netzwerk zirkuliert, Platzieren des Inhalts des Pufferspeichers vor die empfangenen Daten, um die mögliche Anwesenheit eines Lexems zu untersuchen, welches zwischen den beiden Paketen aufgeteilt ist.

3. Verfahren nach einem der vorhergehenden Ansprüche, wobei die ausgewählten Zustände der Zustandsmaschine (20) einen Zustand (30) umfassen, in welchem die aus dem Strom extrahierten Daten direkt zu einem externen Prozessor (14) übertragen werden.

4. Verfahren nach Anspruch 1, wobei der Pufferspeicher (27), welcher die aus dem Strom extrahierten Daten in dem ausgewählten Zustand (31) der Zustandsmaschine (20) empfängt, eine Größe aufweist, welche auf eine Anzahl von konfigurierbaren Zeichen begrenzt ist.

5. Vorrichtung zum Extrahieren von Daten aus einem Datenstrom, welcher auf einem IP-Netzwerk (1) zirkuliert, wobei die Daten des Stroms gemäß einem Anwendungsschicht-Protokoll organisiert sind, die Vorrichtung umfassend:
- eine Zustandsmaschine (20), welche Zustände und Übergänge aufweist, welche gemäß wenigstens einem Typ von aus dem Strom zu extrahierenden Daten konfiguriert sind, wobei die Übergänge zwischen Zuständen durch jeweilige Bedingungen aktiviert werden, welche als Funktion von Regeln zur Organisation von Daten des Stroms gemäß dem Anwendungsschicht-Protokoll definiert sind, wobei wenigstens ein Zustand (30, 31) der Zustandsmaschine für das Extrahieren von Daten aus dem Strom ausgewählt ist,
- einen Eingang (24) zum Empfangen in Echtzeit von Daten des Stroms, welche von IP-Paketen ausgegeben werden, welche nacheinander auf dem Netzwerk zirkulieren;
- einen Übergangsdetektor (21) zum Bestimmen, während die Zustandsmaschine in einem momentanen Zustand ist, ob eine Bedingung einer Aktivierung eines Übergangs von dem momentanen Zustand zu einem Zielzustand durch die Daten des Stroms gegeben ist, welcher an dem Eingang empfangen worden ist, und zum Überführen der Zustandsmaschine in den Zielzustand, wenn die Bedingung zur Aktivierung gegeben ist,
Mittel zum Extrahieren der Daten des Stroms, wenn die Zustandsmaschine in einem Zustand ist, welcher für das Extrahieren von Daten des Stroms ausgewählt ist, und Mittel zum Ignorieren der Daten des Stroms, wenn die Zustandsmaschine in einem Zustand ist, welcher nicht für das Extrahieren von Daten des Stroms ausgewählt ist,
einen Pufferspeicher (27) zum Ablegen der extrahierten Daten des Stroms, wenn die Zustandsmaschine in wenigstens einem Zustand (31) der Zustandsmaschine (20) ist, welcher für das Extrahieren von Daten aus dem Strom ausgewählt ist, Mittel zum Übertragen der Daten, welche in dem Pufferspeicher (27) abgelegt sind, zu einem externen Prozessor (14), sobald die Zustandsmaschine den ausgewählten Zustand verlässt.

6. Vorrichtung nach Anspruch 5, wobei die Bedingungen zum Aktivieren der Übergänge der Zustandsmaschine (20) das Vorliegen von jeweiligen Lexemen in den Daten des Stroms umfassen, und wobei der Übergangsdetektor (21) einem Pufferspeicher (26) zugeordnet ist, welcher dazu gesteuert wird, wenn die Zustandsmaschine in einem momentanen Zustand ist, wenigstens N-1 Zeichen zu empfangen, welche an dem Ende der Daten des Stroms angeordnet sind, welche in einem IP-Paket beobachtet werden, wobei N die größte Anzahl an Zeichen von Lexemen ist, welche den Übergängen aus dem momentanen Zustand heraus entsprechen, wobei der Übergangsdetektor dazu eingerichtet ist, bei einem Empfang von nachfolgenden Daten des Stroms, welche von einem IP-Paket stammen, welches anschließend auf dem Netzwerk (1) zirkuliert, die mögliche Anwesenheit eines Lexems zu untersuchen, welches zwischen den beiden Paketen aufgeteilt ist, indem der Inhalt des Pufferspeichers vor die empfangenen Daten platziert wird.

7. Vorrichtung nach Anspruch 5 oder 6, wobei die ausgewählten Zustände der Zustandsmaschine (20) einen Zustand (30) umfassen, in welchem die Daten, welche aus dem Strom extrahiert worden sind, direkt zu einem externen Prozessor (14) übertragen werden.

8. Vorrichtung nach einem der Ansprüche 5 bis 7, wobei die ausgewählten Zustände der Zustandsmaschine (20) einen Zustand (31) umfassen, in welchem die aus dem Strom extrahierten Daten in einem Pufferspeicher (27) abgelegt werden und dann zu einem externen Prozessor (14) übertragen werden, sobald die Zustandsmaschine den ausgewählten Zustand verlässt.

9. Vorrichtung nach Anspruch 8, wobei der Pufferspeicher (27), welcher die aus dem Strom extrahierten Daten in dem ausgewählten Zustand (31) der Zustandsmaschine (20) empfängt, eine Größe aufweist, welche auf eine Anzahl von konfigurierbaren Zeichen begrenzt ist.

## Claims

1. Method for extracting data from a data stream flowing over an IP network (1), the data of the stream being organized according to an application layer protocol, the method comprising a real time analysis phase of the data stream, executed by a data extractor (13) including a state machine (20), in which the state machine (20) is constructed with states and transitions configured according to at least one type of data to be extracted from the stream, the transitions between states being activated by the respective conditions defined as a function of rules for organization of the data of the stream according to said application layer protocol, at least one state (30, 31) being selected for the extraction of data from the stream,
wherein the real time analysis phase of the data stream, comprises:
• observing the data of the stream originating from IP packets flowing successively over the network;
• when the state machine is in a current state, determining if an activation condition of a transition from the current state to a target state is fulfilled by the observed data of the stream and when this activation condition is fulfilled, changing the state machine to the target state;
• extracting the data from the stream when the state machine is in a state selected for the extraction of data from the stream; and
• disregarding the data of the stream when the state machine is in a state not selected,
wherein in at least one stat (31) of the state machine (20) selected for the extraction of data from the stream, the data extracted from the stream are stored in buffer memory (27) then transferred to an external processor (14) once the state machine leaves said selected state.

2. Method according to claim 1, wherein activation conditions of the transitions of the state machine (20) comprise the presence of respective lexemes in the data of the stream, and wherein the real time analysis phase of the data stream comprises moreover, when the state machine is in a current state:
• storing in buffer memory (26) at least N-1 characters situated at the end of the data of the stream observed in an IP packet, N being the largest number of characters of the lexemes corresponding to the transitions out of the current state; and
• on receiving next data of the stream originating from an IP packet flowing subsequently over the network, placing the content of the buffer memory in front of the data received in order to search for the possible presence of a lexeme split between the two packets.

3. Method according to any one of the preceding claims, wherein the selected states of the state machine (20) comprise a state (30) in which the data extracted from the stream are directly transferred to an external processor (14).

4. Method according to claim 1, wherein the buffer memory (27) receives the data extracted from the stream in said selected state (31) of the state machine (20) has a size limited to a configurable number of characters.

5. Device for extracting data from a data stream flowing over an IP network (1), the data of the stream being organized according to an application layer protocol, the device comprising:
- a state machine (20) having states and transitions configured according to at least one type of data to be extracted from the stream, the transitions between states being activated by the respective conditions defined as a function of rules for organization of the data of the stream according to said application layer protocol, at least one state (30, 31) of the state machine being selected for the extraction of data from the stream;
- an input (24) for receiving in real time the data of the stream originating from IP packets flowing successively over the network;
- detector of transitions (21) for determining, when the state machine is in a current state, if an activation condition of a transition from the current state to a target state is fulfilled by the data of the stream received at the input and for changing the state machine to the target state when said activation condition is fulfilled,
means for extracting the data of the stream when the state machine is in a selected state for the extraction of data from the stream, and means for disregarding said data of the stream when the state machine is in an unselected state for the extraction of data from the stream,
a buffer memory (27) to put the data extracted from the stream when the state machine is in at least one stat (31) of the state machine (20) selected for the extraction of data from the stream,
means to transfer the data put in the buffer memory (27) to an external processor (14) once the state machine leaves said selected state.

6. Device according to claim 5, wherein activation conditions of the transitions of the state machine (20) comprise the presence of respective lexemes in the data of the stream, and wherein the detector of transitions (21) is associated with a buffer memory (26) controlled in order to receive, when the state machine is in a current state, at least N-1 characters situated at the end of the data of the stream observed in an IP packet, N being the largest number of characters of the lexemes corresponding to the transitions out of the current state, the detector of transitions being arranged in order to, on receiving the next data of the stream originating from an IP packet flowing subsequently over the network (1), search for the possible presence of a lexeme split between the two packets by putting the content of the buffer memory in front of the data received.

7. Device according to claim 5 or 6, wherein the selected states of the state machine (20) comprise a state (30) in which the data extracted from the stream are directly transferred to an external processor (14).

8. Device according to any one of claims 5 to 7, wherein the selected states of the state machine (20) comprise a state (31) in which the data extracted from the stream are stored in buffer memory (27) then transferred to an external processor (14) once the state machine leaves said selected state.

9. Device according to claim 8, wherein the buffer memory (27) receiving the data extracted from the stream in said selected state (31) of the state machine (20) has a size limited to a configurable number of characters.
